# EUROPEAN PATENT APPLICATION

(11) **EP 4 484 389 A1**
(43) Date of publication of application: **01.01.2025**
(21) Application number: 23763734.3
(22) Date of filing: 03.03.2023
(51) Int. Cl.: C03C 3/00, C03C 12/00, C11D 7/20

(54) **DETERGENT GLASS COMPOSITION AND METHOD FOR PREPARING DETERGENT GLASS POWDER BY USING SAME**

(30) Priority: 03.03.2022 KR 20220027416
(71) Applicant: LG Electronics Inc., Yeongdeungpo-gu Seoul 07336 (KR)
(72) Inventor: CHUNG, Jaeyeop, Seoul 08592 (KR); KIM, Young Seok, Seoul 08592 (KR); KIM, Namjin, Seoul 08592 (KR)
(74) Representative: Vossius & Partner Patentanwälte Rechtsanwälte mbB
(86) International application number: PCT/KR2023/002921
(87) International publication number: WO 2023/167536

(57) **Abstract**

The present invention relates to a glass composition having a composite composition system in which a borate composition and a silicate composition are mixed, and disclosed are an eco-friendly detergent glass composition and a method for preparing an eco-friendly detergent glass powder by using same, the composition having maximized elution of ions such as K⁺, Na⁺, Ca²⁺ and Mg²⁺, thereby enabling high-concentration elution water to be prepared. Therefore, the eco-friendly detergent glass composition and the method for preparing an eco-friendly detergent glass powder by using same, according to the present invention, enable a predetermined amount of glass to be repeatedly used and washing performance to be maintained constant up to at least 40 cycles.

## Description

### FIELD

The present disclosure relates to a detergent glass composition and a method for preparing detergent glass powder using the same.

### DESCRIPTION OF RELATED ART

In general, a process of removing contaminants from textiles or clothing is called washing, and a process of removing contaminants from dishes is called cleaning.

Such washing and cleaning refer to removing contaminants by dispersing surfactants in water and increasing alkalinity of water.

In washing and cleaning methods using synthetic detergents, because a large amount of water is used, a removal effect for water-based contaminants is excellent, but there is a limit in removal of oil-based contaminants.

In addition, the existing synthetic detergents use linear alkyl benzene, anionic surfactants, builders, and the like to wash and clean dirt from the clothing or the dishes, after which the clothing or the dishes are dried.

However, when performing the washing and the cleaning using the existing synthetic detergents, environmental pollution occurs by the surfactants not dissolving in water and causing eutrophication.

In addition, an existing technology using a glass composition as a detergent is known, but when glass particles that are not completely dissolved after the washing are attached to fibers or the like it may be a problem in terms of environment.

In addition, the existing glass composition has a high content of SiO₂, so that it is not sufficiently eluted during a short washing time and a large amount of residual substances remain.

In addition, a cost of raw materials may increase because of use of Ag₂O, and environmental problems may be caused.

### [Prior Art Document]

(Patent Document 1) KR Patent Application Publication No. 10-2001-0089638 (Published on October 6, 2001)

### DISCLOSURE

### TECHNICAL PURPOSES

The present disclosure is to provide an eco-friendly detergent glass composition and a method for preparing eco-friendly detergent glass powder using the same that suggest a new washing solution capitalizing elution characteristics of glass with low water resistance, unlike general glass.

In addition, the present disclosure is to provide an eco-friendly detergent glass composition and a method for preparing eco-friendly detergent glass powder using the same that may prepare high-concentration eluate using two glass compositions.

In addition, the present disclosure is to provide an eco-friendly detergent glass composition and a method for preparing eco-friendly detergent glass powder using the same that may repeatedly use a certain amount of glass and maintain constant washing performance for up to 40 times or more.

Purposes according to the present disclosure are not limited to the above-mentioned purpose. Other purposes and advantages according to the present disclosure that are not mentioned may be understood based on following descriptions, and may be more clearly understood based on embodiments according to the present disclosure. Further, it will be easily understood that the purposes and advantages according to the present disclosure may be realized using means shown in the claims and combinations thereof.

### TECHNICAL SOLUTIONS

An eco-friendly detergent glass composition and a method for preparing eco-friendly detergent glass powder using the same according to the present disclosure may enable pH control using a borate-based first glass composition and a silicate-based second glass composition and maximize elutability of ions such as K⁺, Na⁺, Ca²⁺, and Mg²⁺, thereby enabling production of high-concentration eluate.

As a result, the eco-friendly detergent glass composition and the method for preparing the eco-friendly detergent glass powder using the same according to the present disclosure may enable repeated use of a certain amount of glass and consistently maintain a washing performance for 40 cycles or more.

That is, in the present disclosure, the eco-friendly detergent glass composition that may exhibit uniform washing performance even for 40 cycles or more was developed using the two glass compositions.

To this end, an eco-friendly detergent glass composition according to an embodiment of the present disclosure includes a mixture of a first glass composition and a second glass composition, the first glass composition includes, based on 100wt% of the first glass composition, 60 to 70wt% of B₂O₃, 1 to 4wt% of Al₂O₃, 5 to 9wt% of CaO, and 15 to 30wt% of K₂O and Na₂O in total, and the second glass composition includes, based on 100wt% of the second glass composition, 65 to 70wt% of SiO₂, 5 to 9wt% of CaO, and 21 to 28wt% of K₂O and Na₂O in total.

Each of the first glass composition and the second glass composition includes CaO and MgO in an amount smaller than 10wt% in total.

CaO, MgO, K₂O, and Na₂O included in the first glass composition may satisfy a following Formula 1.

Formula 1: ([CaO] + [MgO]) /([K₂O] + [Na₂O]) < 0.53

(Here, [] represents wt% of each component.)

Further, CaO, MgO, K₂O, Na₂O, and B₂O₃ included in the first glass composition may satisfy a following Formula 2.

Formula 2: ([CaO] + [MgO] + [K₂O] + [Na₂O])/[ B₂O₃] ≥ 0.37

(Here, [] represents wt% of each component.)

Further, preferably, CaO, MgO, K₂O, Na₂O, and SiO₂ included in the second glass composition may satisfy a following Formula 3.

Formula 3: ([CaO] + [MgO] + [K₂O] + [Na₂O])/[ SiO₃] ≥ 0.42

(Here, [] represents wt% of each component.)

### TECHNICAL EFFECTS

According to the present disclosure, the new solution that realizes the superior cleaning power equivalent to or greater than that of the commercial detergents may be proposed.

In addition, because the present disclosure has no surfactant added, not only may the rinsing process be shortened, but also the amount of water used during the washing may be reduced.

In addition, according to the present disclosure, when the commercial detergent and the eluate are used together, the washing efficiency may be increased, resulting in the energy-saving effect.

In addition, according to the present disclosure, when the detergent composition including the two glass compositions is used as the eco-friendly washing detergent or the cleaning aid and is put into the automatic detergent compartment of the washing machine, the glass may be uniformly and consistently eluted, thereby extending the recurring period and maintaining the high reliability during the repeated washing processes.

In addition to the above-described effects, specific effects of the present disclosure will be described together while describing specific matters for carrying out the invention below.

### BRIEF DESCRIPTION OF DRAWINGS

FIG. 1 is a process flowchart showing a method for preparing eco-friendly detergent glass powder according to an embodiment of the present disclosure.
FIGS. 2 to 4 are graphs showing results of evaluating washing sustainability of Preset Examples and Comparative Examples.

### DETAILED DESCRIPTIONS

The above-mentioned purposes, features, and advantages will be described in detail later with reference to the attached drawings, so that those skilled in the art in the technical field to which the present disclosure belongs may easily practice the technical ideas of the present disclosure. In describing the present disclosure, when it is determined that a detailed description of the publicly known technology related to the present disclosure may unnecessarily obscure the gist of the present disclosure, the detailed description thereof will be omitted. Hereinafter, a preferred embodiment according to the present disclosure will be described in detail with reference to the attached drawings. In the drawings, identical reference numerals are used to indicate identical or similar components.

As used herein, singular expressions include plural expressions, unless the context clearly dictates otherwise. In the present application, terms such as "composed of' or "include" should not be construed as necessarily including all of various components or steps described herein, and should be interpreted as being able to not including some of the components or the steps and further including additional components or steps.

Hereinafter, a detergent glass composition and a method for preparing detergent glass powder using the same according to some embodiments of the present disclosure will be described.

### Detergent glass composition

The present disclosure is to provide an eco-friendly washing detergent technology that may repeatedly produce weakly alkaline water with a pH level of 9.5 to 10.0 by combining two elutable glass compositions 40 times or more.

The detergent glass composition according to the present disclosure includes a first glass composition (a borate composition) and a second glass composition (a silicate composition). The silicate composition dissolves within 5 minutes when washing water is supplied to increase the pH, and forms a large amount of OH⁻ ions to decompose protein and complex stains during a washing process. The borate composition dissolves in water to produce B(OH)₃ and B(OH)₄⁻ ions, and maintains the pH of water at a level of 9 to 9.5. When the detergent glass composition is composed of only the silicate composition, there is a disadvantage in that the pH rises to 11 or higher, causing discoloration resulted from colored stains, but the present disclosure adds the borate composition to solve such disadvantage. The detergent glass composition according to the present disclosure may maintain cleaning power even when solid glass is eluted in water and then re-eluted, and may maintain a washing performance for a total of 40 cycles. The detergent composition according to the present disclosure has a longer-lasting performance than a detergent composition composed of only the borate composition or only the silicate composition.

The present disclosure includes the first glass composition (the borate composition) to exhibit a bleaching action and a pH control function.

In the first glass composition, contents of alkali oxides (Na₂O and K₂O) and alkaline earth oxides (CaO and MgO) are important to maximize elutability of borate glass while simultaneously producing solid (bulk) glass that may maintain a shape thereof to some extent in air.

Unlike the alkali and alkaline earth oxides, Al₂O₃ is used as a component that controls the elution of the glass, so that it is a very important component that is added in a small amount to maintain the shape of the glass in air. B₂O₃, a main component of the glass, is eluted in water to form B(OH)₃ and B(OH)₄⁻ ions and contributes to cleaning of the colored stains during the washing. In addition, the pH of washing water (eluate) is maintained at a level of 9.5 to 10.0 by an interaction of the B(OH)₃ and B(OH)₄⁻ ions, preventing the discoloration resulted from the colored stains during the washing process.

In addition, the alkaline and alkaline earth components form the OH⁻ ions when eluted in water and contribute to washing of the protein and oil-based stains.

Next, the second glass composition (the silicate composition) included in the present disclosure contributes to the washing of the protein and oil-based stains, a development of antibacterial properties, and the like.

The second glass composition has better chemical durability than the first glass composition, which is the borate composition, and is therefore difficult to be eluted in water.

However, when the alkali and alkaline earth contents are equal to or greater than 30wt% within the glass structure, the elution of the alkaline and alkaline earth ions may occur very quickly. When the alkali ions and the alkaline earth ions are eluted, a large amount of OH⁻ ions are generated in water. The OH⁻ ions generated at this time destroy structures of the protein and oil-based stains, contributing to the washing action. An eco-friendly detergent that utilizes such principle is an "alkali ion water washing detergent". However, when only the silicate composition, such as the second glass composition, is used as the detergent, the pH of eluate (washing water) may rise to 11 or higher, which may cause the discoloration resulted from the colored stains. Therefore, in the present disclosure, the detergent is composed by combining the first glass composition (the borate composition) having the pH control function with the second glass composition (the silicate composition).

To this end, the eco-friendly detergent glass composition according to an embodiment of the present disclosure includes the mixture of the first glass composition and the second glass composition, wherein the first glass composition includes, based on 100wt% of the first glass composition, 60 to 70wt% of B₂O₃; 1 to 4wt% of Al₂O₃; 5 to 9wt% of CaO; and 15 to 30wt% of K₂O and Na₂O in total; and the second glass composition includes, based on 100wt% of the second glass composition, 65 to 70wt% of SiO₂; 5 to 9wt% of CaO; and 21 to 28wt% of K₂O and Na₂O in total.

In this regard, it is preferable that each of the first glass composition and the second glass composition includes less than 10wt% of CaO and MgO in total.

CaO, MgO, K₂O, and Na₂O included in the first glass composition may satisfy a following Formula 1.

Formula 1: ([CaO] + [MgO]) /([K₂O] + [Na₂O]) < 0.5

(Here, [] represents wt% of each component.)

In addition, CaO, MgO, K₂O, Na₂O, and B₂O₃ included in the first glass composition may satisfy a following Formula 2.

Formula 2: ([CaO] + [MgO] + [K₂O] + [Na₂O])/[ B₂O₃] ≥ 0.37

(Here, [] represents wt% of each component.)

In addition, preferably, CaO, MgO, K₂O, Na₂O, and SiO₂ included in the second glass composition may satisfy a following Formula 3.

Formula 3: ([CaO] + [MgO] + [K₂O] + [Na₂O])/[ SiO₃] ≥ 0.42

(Here, [] represents wt% of each component.)

Hereinafter, a role and a content of each component of the eco-friendly detergent glass composition according to an embodiment of the present disclosure will be described in detail.

B₂O₃, as a glass former that is used along with SiO₂, P₂O₅, and the like, is a key component that enables sufficient vitrification, and forms a core framework in the structure of the glass. B₂O₃ mainly exists in forms of tri-coordinated BO₃ and tetra-coordinated BO₄ in the glass, and also plays a role in lowering a melting temperature of the glass.

Compared to SiOz-based glass, glass containing a lot of B₂O₃ is vulnerable to water, and maximizes the elutability of the glass. In addition, B₂O₃ has a bleaching effect when eluted and acts as a pH buffer, thereby not causing the discoloration resulted from the colored stains.

Therefore, it is desirable to add B₂O₃ at a content ratio of 60 to 70wt% in the first glass composition. When the amount of B₂O₃ added is smaller than 60wt%, the bleaching effect may not be properly exerted, making it difficult to secure the cleaning power. On the other hand, when the amount of B₂O₃ added exceeds 70wt%, a structural problem of B and P in a network-forming structure may cause a decrease in water resistance because of inherent properties of the elements.

SiO₂, as the most representative glass former oxide, is a component that is required to be added in a small amount because it increase the vitrification. When SiO₂ is added in a large amount, it increases the water resistance of the glass and controls the elution. In addition, it also increases the melting temperature of the glass.

Therefore, it is preferable that SiO₂ is added to the second glass composition at a content ratio of 65 to 70wt%. when SiO₂ is added in the large amount exceeding 70wt%, workability and yield decrease during a cooling process as viscosity increases when the glass is melted. On the other hand, when SiO₂ is added in an amount smaller than 65wt%, the structure of the glass is weakened and the water resistance decreases.

Al₂O₃, as the most representative intermediate oxide, increases the water resistance of the glass and controls the elution even when added to the first glass composition (the borate composition) in a small amount. However, in the present disclosure, when Al₂O₃ is added in an amount equal to or greater than 5wt% based on 100wt% of the first glass composition, the elution of the borate-based glass becomes very difficult. Therefore, in the present disclosure, the content of Al₂O₃ in the first glass composition is limited to be smaller than 5wt%. Specifically, the first glass composition includes 1 to 4wt% of Al₂O₃.

Na₂O and K₂O, as the alkali oxides, are oxides that act as network modifiers that form non-crosslinking bonds in the glass composition. Such components are not able to be vitrified alone, but are able to be vitrified when mixed with the glass former such as SiO₂, B₂O₃, P₂O₅, V₂O₅, and Ga₂O₃ in a certain ratio.

Alkali ions are eluted in water via ion exchange with H₃O⁺ and form the OH⁻ ions, and thus, are main components to exert the cleaning power. However, when a large amount of alkaline components is contained, a concentration of OH⁻ ions increases, so that the pH increases to 10 to 11 or higher, which causes the discoloration resulted from the colored stains.

Therefore, in the present disclosure, the above shortcomings are reduced by combining the silicate-based glass with controlled alkali oxide content with the borate-based glass with controlled alkali oxide content.

In particular, because elution characteristics of the glass vary greatly depending on the content ratios of the alkali oxide and B₂O₃ and SiO₂, adjusting the content ratios is one of important factors in the present disclosure.

In the present disclosure, a glass composition that has excellent initial elution characteristics and is eluted well even when used continuously was experimentally checked. In the present disclosure, the first glass composition includes 15 to 30wt% of the alkali oxide and the second glass composition includes 21 to 28wt% of the alkali oxide. In the present disclosure, the alkali oxides include Na₂O and K₂O.

When Na₂O and K₂O are added in a total amount smaller than a minimum content in each glass composition, it may be difficult to secure cleaning sustainability. On the contrary, when Na₂O and K₂O are added in a total amount exceeding a maximum content in each glass composition, the concentration of the OH⁻ ions increases, which may cause the discoloration resulted from the colored stains.

The alkaline earth oxide such as CaO and MgO basically acts as the network modifier that forms the non-crosslinking bonds in the glass, like the alkali oxide. Therefore, the alkaline earth oxide such as CaO and MgO acts to weaken the structure of the glass. However, compared to the alkali ions, a degree of weakening the structure of the glass is low, so that when the alkaline earth oxide is added to the borate-based glass, the water resistance may rather increase slightly.

The alkali ions should be eluted at a rate similar to that of boron (B) ions to enable constant elution thereof and to be continuous used as the detergent and a washing aid. In this regard, the alkaline earth oxide is added to control and adjust the elution rates of the ions. In addition, like the alkali oxide, the alkaline earth oxide is eluted in water to form the OH⁻ ions, which helps with the washing.

In the present disclosure, the content of CaO in both the first glass composition and the second glass composition is equal to or greater than 5wt%, and specifically, CaO is included in each glass composition in a content of 5 to 9wt%.

Preferably, each of the first glass composition and the second glass composition may further include 0 to 4wt% of MgO. However, it is preferable that each of the first glass composition and the second glass composition includes less than 10wt% of CaO and MgO in total.

In addition, CaO, MgO, K₂O, and Na₂O included in the first glass composition may satisfy a following Formula 1.

Formula 1: ([CaO] + [MgO]) /([K₂O] + [Na₂O]) < 0.53

(Here, [] represents wt% of each component.)

In addition, CaO, MgO, K₂O, Na₂O, and B₂O₃ included in the first glass composition may satisfy a following Formula 2.

Formula 2: ([CaO] + [MgO] + [K₂O] + [Na₂O])/[ B₂O₃] ≥ 0.37

(Here, [] represents wt% of each component.)

In addition, CaO, MgO, K₂O, Na₂O, and SiO₂ included in the second glass composition may satisfy a following Formula 3.

Formula 3: ([CaO] + [MgO] + [K₂O] + [Na₂O])/[ SiO₃] ≥ 0.42

(Here, [] represents wt% of each component.)

The reason for controlling the content of each component as above is to increase a degree of ion bonding in the glass by increasing a content of the network modifier, thereby increasing the elutability.

### Method for preparing detergent glass powder

Hereinafter, a method for preparing the eco-friendly detergent glass powder according to an embodiment of the present disclosure will be described with reference to the attached drawings.

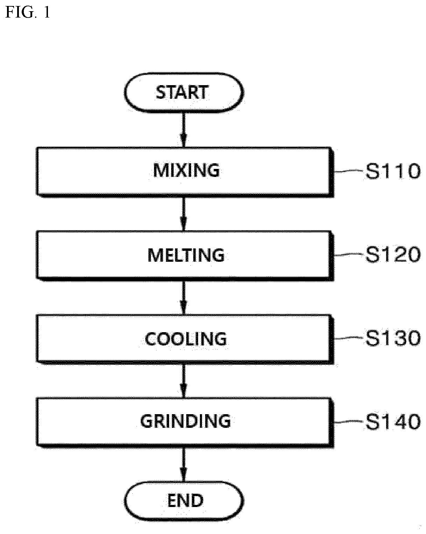

FIG. 1 is a process flowchart showing a method for preparing eco-friendly detergent glass powder according to an embodiment of the present disclosure.

As shown in FIG. 1, the method for preparing the eco-friendly detergent glass powder according to an embodiment of the present disclosure includes a mixing step (S110), a melting step (S120), a cooling step (S130), and a grinding step (S140).

### Mixing

In the mixing step (S110), the first glass composition and the second glass composition described above are mixed with each other at the composition ratio described above and stirred to generate the glass composition.

As described above, the first glass composition includes, based on 100wt% of the first glass composition, 60 to 70wt% of B₂O₃; 1 to 4wt% of Al₂O₃; 5 to 9wt% of CaO; and 15 to 30wt% of K₂O and Na₂O in total; and the second glass composition includes, based on 100wt% of the second glass composition, 65 to 70wt% of SiO₂; 5 to 9wt% of CaO; and 21 to 28wt% of K₂O and Na₂O in total.

### Melting

In the melting step (S120), the glass composition is melted.

In the present step, it is preferable to perform the melting in a temperature range of 700 to 1,100°C for 1 to 60 minutes. When the melting temperature is lower than 700°C or the melting time is shorter than 1 minute, the glass composition may not fully melt, leading to immiscibility in the glass melt. On the other hand, when the melting temperature exceeds 1,100°C or the melting time exceeds 60 minutes, it is not economical because excessive energy and time are required.

### Cooling

In the cooling step (S130), the molten glass composition is cooled to a room temperature.

In the present step, it is preferable that the cooling is performed in a cooling in furnace scheme. When air cooling or water cooling is applied, internal stress of the composite glass is severely generated, which may cause cracks in some cases, so that it is preferable that the cooling is performed in the cooling in furnace scheme.

### Grinding

In the grinding step (S140), the cooled glass is ground. In this regard, it is preferable to use a dry grinder for the grinding.

By such grinding, the glass is finely ground and glass powder is prepared. It is preferable that such glass powder has an average diameter equal to or smaller than 30 *µ*m, and an average diameter in a range of 15 to 25 *µ*m is able to be proposed as a more preferable range.

Via the above processes (S110 to S140), the eco-friendly detergent glass powder according to an embodiment of the present disclosure may be prepared.

When the eco-friendly detergent glass powder prepared by the method according to the present disclosure example is used as the eco-friendly detergent, a new solution that implements an excellent cleaning power equivalent to or greater than that of a commercial detergent may be presented.

In addition, when the eco-friendly detergent glass powder prepared by the method according to an embodiment of the present disclosure is used as the eco-friendly detergent, not only may a rinsing process be shortened because no surfactant is added, but also an amount of water used during the washing may be reduced.

In addition, when the eco-friendly detergent glass powder prepared by the method according to an embodiment of the present disclosure is used as the eco-friendly detergent, when the commercial detergent and eluate are used together, a washing efficiency may be increased, resulting in an energy-saving effect.

In addition, when the eco-friendly detergent of the present disclosure is put into an automatic detergent compartment of a washing machine, the glass may be eluted uniformly and consistently, so that a recurring period may be extended and high reliability may be maintained even during the repetitive washing process.

### Examples

Hereinafter, a composition and a function of the present disclosure will be described in more detail via a preferred example of the present disclosure. However, this is presented as a preferred example of the present disclosure and is not able to be interpreted as limiting the present disclosure in any way.

Contents not described herein may be sufficiently technically inferred by those skilled in the present technical field, so that descriptions thereof will be omitted.

### 1. Sample preparation and cleaning power evaluation

Table 1 shows components and component ratios in preparation examples for borate-based glass compositions. In addition, Table 2 shows components and component ratios in preparation examples for silicate-based glass compositions. In addition, Tables 1 and 2 describe cleaning power of detergents prepared from the respective preparation examples.

**[Table 1] (Unit: wt%)**

| | | Al₂O₃ | B₂O₃ | Na₂O | K₂O | CaO | MgO |
|---|---|---|---|---|---|---|---|
| | Composition 1 | 4 | 60 | 26 | 1 | 5 | 4 |
| | Composition 2 | 4 | 70 | 1 | 16 | 6 | 3 |
| | Composition 3 | 3 | 65 | 1 | 22 | 7 | 2 |
| | Composition 4 | 2 | 70 | 18 | 1 | 5 | 4 |
| | Composition 5 | 2 | 60 | 1 | 30 | 5 | 2 |
| Borate composition | Composition 6 | 1 | 60 | 30 | 3 | 5 | 1 |
| | Composition 7 | 1 | 70 | 12 | 11 | 6 | 0 |
| | Composition 8 | 5 | 65 | 7 | 15 | 5 | 3 |
| | Composition 9 | 6 | 65 | 8 | 15 | 5 | 1 |
| | Composition 10 | 4 | 65 | 10 | 10 | 5 | 6 |
| | Composition 11 | 4 | 65 | 10 | 8 | 5 | 8 |

| | | | | | | | |
|---|---|---|---|---|---|---|---|
| (Unit: wt%) | | | | | | | |

**[Table 2]**

| | | SiO₂ | Na₂O | K₂O | CaO | MgO |
|---|---|---|---|---|---|---|
| | Composition 12 | 65 | 25 | 1 | 5 | 4 |
| | Composition 13 | 70 | 1 | 20 | 6 | 3 |
| | Composition 14 | 65 | 1 | 25 | 7 | 2 |
| | Composition 15 | 70 | 20 | 1 | 5 | 4 |
| Silicate compositi on | Composition 16 | 65 | 1 | 27 | 5 | 2 |
| | Composition 17 | 65 | 25 | 1 | 5 | 4 |
| | Composition 18 | 71 | 7 | 14 | 5 | 3 |
| | Composition 19 | 73 | 8 | 13 | 5 | 1 |
| | Composition 20 | 70 | 10 | 9 | 5 | 6 |
| | Composition 21 | 70 | 7 | 10 | 5 | 8 |

| | | | | | | |
|---|---|---|---|---|---|---|
| (Unit: wt%) | | | | | | |

In this regard, the compositions 1 to 21 were mixed and stirred as described in Tables 1 and 2 to form the glass compositions. Then the glass compositions were melted in an electric furnace at a temperature of 1,050°C, and then cooled in a form of a glass bulk on a stainless steel plate via the air cooling to obtain cullet-shaped glass. Thereafter, the glass was pulverized with the dry grinder (a ball mill) and then passed through a 400 mesh sieve to prepare eco-friendly detergent glass powder samples with a D90 average particle size of 20 *µ*m. In this regard, Na₂CO₃ and K₂CO₃ were respectively used as raw materials for Na₂O and K₂O, and remaining components except those were the same as those described in Tables 1 and 2.

### 2. Cleaning power evaluation

Tables 3 and 4 show results of evaluating the cleaning power of the samples based on the respective compositions, and Table 5 shows results of evaluating cleaning power of tap water and commercial detergents. In this regard, Table 5 used two types of commercial liquid detergents (product P from company H and product T from company L), and injected the two types of detergents in quantitative amounts and used them as references to identify cleaning power levels of glass eluate.

In this regard, the cleaning power evaluation was conducted using a Terg-O-Tometer.

First, for the preparation of eluate, 320g of glass powder prepared based on each composition was continuously immersed in a plastic container containing 600mL of room temperature water, and then 120mL of eluate was extracted every 6 hours to evaluate the cleaning power, and at the same time, 120mL of tap water was filled into the plastic container to maintain 600mL of water.

In this regard, three types of stained fabrics: EMPA red wine fabric, blood fabric, and Jis fabric (composite strained fabric) were used to examine the cleaning power and cleaning sustainability for each composition of glass eluate. The cleaning power evaluation was performed following the KS M 2709 standard.

Of 600mL of the glass eluate, 120mL was extracted. Then, 6mL of the extracted glass eluate was added to 1L of tap water, the washing was performed at 30°C for 10 minutes, and then rinsing was performed twice with 1L of tap water for 3 minutes each. In the case of repeated cleaning power, 120mL of 600mL of eluate was extracted. Then, 6mL of the extracted eluate was used for the washing, and then 120mL of tap water was filled into an elution container again. This was performed a total of 40 times for each composition. In this regard, a time between a first washing test and a second washing test was set to be approximately 6 hours, and the eluate was extracted homogeneously.

**[Table 3]**

| | | Wine (%) | Blood (%) | Jis (%) |
|---|---|---|---|---|
| | Composition 1 | 43.7 | 47.1 | 30.3 |
| | Composition 2 | 45.7 | 53.2 | 33.2 |
| | Composition 3 | 44.8 | 52.8 | 32.1 |
| | Composition 4 | 46.9 | 45.3 | 29.8 |
| | Composition 5 | 45.9 | 57.1 | 34.2 |
| Borate compositi on | Composition 6 | 46.1 | 55.8 | 33.7 |
| | Composition 7 | 47.8 | 49.1 | 31.7 |
| | Composition 8 | 40.1 | 33.3 | 18.7 |
| | Composition 9 | 39.8 | 31.8 | 15.4 |
| | Composition 10 | 41.1 | 34.7 | 19.8 |
| | Composition 11 | 40.7 | 32.5 | 16.8 |

**[Table 4]**

| | | Wine (%) | Blood (%) | Jis (%) |
|---|---|---|---|---|
| Silicate compositi | Composition 12 | 33.8 | 45.3 | 25.1 |
| | Composition 13 | 35.7 | 43.7 | 27.7 |
| on | Composition 14 | 35.1 | 45.2 | 27.8 |
| | Composition 15 | 36.8 | 45.8 | 24.5 |
| | Composition 16 | 34.9 | 43.2 | 29.2 |
| | Composition 17 | 33.2 | 48.2 | 29.1 |
| | Composition 18 | 37.2 | 34.5 | 16.5 |
| | Composition 19 | 38.5 | 32.7 | 14.2 |
| | Composition 20 | 39.2 | 36.7 | 17.7 |
| | Composition 21 | 38.7 | 37.3 | 16.8 |

**[Table 5]**

| Reference | Wine (%) | Blood (%) | Jis (%) |
|---|---|---|---|
| Tap water | 39.2 | 25.1 | 10.2 |
| product P from company H | 49.6 | 30.8 | 37.1 |
| product T from company L | 40.2 | 27.9 | 30.2 |

As may be seen in Table 3, it may be seen that, in the borate composition, when a content of Al₂O₃ is smaller than 5wt%, the cleaning power is as high as that of the commercial detergents. However, it may be seen that, when the content of Al₂O₃ is equal to or greater than 5wt%, cleaning power for the blood and Jis stains decreases rapidly. This is because, when the content of Al₂O₃ increases, chemical durability of the glass composition increases and the elutability decreases rapidly.

In addition, it may be seen that, when a sum of weight percentages of MgO and CaO exceeds 10wt%, the cleaning power decreases. This is expected because the durability increases when the alkaline earth oxide is added to the glass composition in a larger amount than the alkaline oxide.

In conclusion, to have the durability of a certain level or higher and at the same time have the cleaning power in the borate composition, the content of Al₂O₃ should be 1 to 4wt%, and it is desirable that a sum of the contents of MgO and CaO is 1 to 10wt%.

As may be seen in Table 4, in the case of the silicate composition, discoloration of the wine-strained fabric occurred after the washing. This is because the pH increased to 11 or higher. It may be seen in the silicate composition that, when the content of SiO₂ exceeds 70wt%, the cleaning power decreases rapidly and becomes similar to the cleaning power of tap water. This is because the elution characteristics are limited as the content of SiO₂ increases. In addition, it may be seen that, when the content of the alkaline earth oxide exceeds 10wt%, the cleaning power decreases rapidly, as may be seen in the Composition 21.

### 3. Cleaning sustainability evaluation

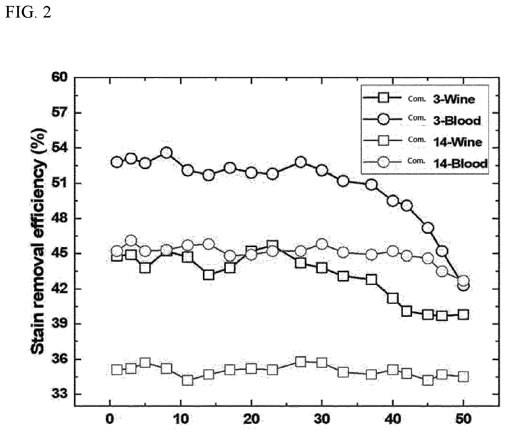

FIG. 2 is a graph showing cleaning sustainability of Composition 3 (a borate composition) and Composition 14 (a silicate composition).

It may be seen that the cleaning power of the borate composition decreases from the 30th cycle, as may be seen in FIG. 2. This is because composition and properties of the glass change as a borate network collapses with the elution of the alkali and alkaline earth ions during the elution process of the borate composition. On the other hand, it may be seen that the silicate composition exhibits almost constant cleaning power up to the 45th cycle. The silicate composition maintains properties thereof without collapse of a silicate network even when the alkali and alkaline earth ions are eluted. In other words, it may be inferred that the silicate composition results in formation of a porous glass as the alkali and alkaline earth ions are continuously eluted.

In general, the borate glass has better cleaning power than the silicate glass and does not cause the wine discoloration. However, it may be seen that, in terms of the repeated cleaning power, the silicate glass is better than the borate glass.

### 4. Repeated washing test for composite composition

Examples of detergent glass compositions having composite compositions according to the present disclosure will be described.

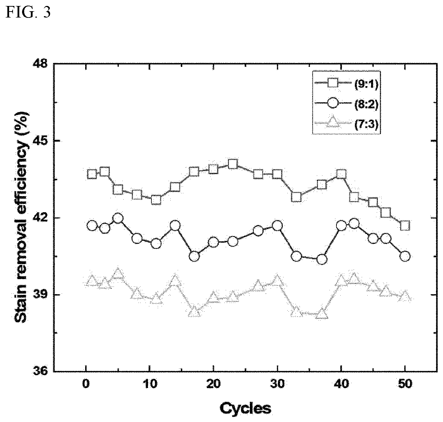

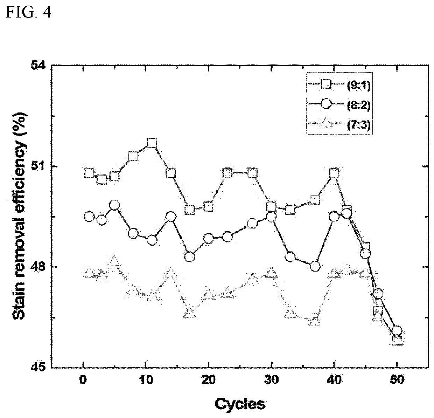

FIGS. 3 and 4 show washing cycles of composite compositions in which Composition 3 and Composition 14 are combined with each other in ratios of 9:1 (270g:30g), 8:2 (240g:60g), and 7:3 (210g:90g), respectively.

It may be seen that, when the silicate composition is partially combined with the borate composition, the number of possible washing cycles increases, as shown in FIGS. 3 and 4.

In addition, it may be seen that the discoloration resulted from the wine does not occur even when the silicate composition is combined up to 20%. This is a result of the interaction between B(OH)₃ and B(OH)₄⁻ ions. However, it may be seen that, when the ratio between the compositions is 7:3, the cleaning power for the wine is lower than that of the commercial detergents. Therefore, it may be concluded that, when the composition ratio is in a range of 9:1 to 8:2, the cleaning power is the best, and at the same time, the repeated cleaning power is the best.

As such, when the detergent composition 300g using the glass compositions as in the present disclosure is provided in a solid form, it may be used as the eco-friendly detergent that is able to perform the cleaning 40 times or more. Compared to existing eco-friendly alkaline ionized water, the present disclosure offers significantly enhanced usability and reduced product volume because it is in the compact solid form rather than a liquid form.

In addition, the present disclosure does not cause the discoloration resulted from the colored stains because it stably maintains the pH between 9.5 and 10.0. In addition, because the present disclosure includes CaO in an amount equal to or greater than 5wt% in the entire composition, antibacterial properties may be exhibited on the fabrics and within the washing machine.

Table 6 shows results of antibacterial evaluation of the detergent compositions using the composite compositions of the present disclosure. It may be seen that the antibacterial properties are exhibited in a combination composition of Compositions 3 and 14 and a combination composition of Compositions 4 and 12. On the other hand, it may be seen that the antibacterial properties of a composite composition using Composition 9 with a high Al₂O₃ content and Composition 19 with a high SiO₂ content are rapidly reduced. This is because the elution of Ca²⁺ and the alkaline components is controlled as the contents of Al₂O₃ and SiOz increase.

**[Table 6]**

| | | Present Example 1 | Present Example 2 | Comparati ve Example 1 | Comparati ve Example 2 |
|---|---|---|---|---|---|
| Mixing ratio | | Composition 3(90%) : Composition 14(10%) | Compositi on 4(80%) : Compositi on 12(20% ) | Compositio n 9(80%): Compositio n 19(20%) | Compositi on 19 (100%) |
| Antibacte rial properties | Staphylococc us aureus | 99.99 % | 99.99 % | 87 % | 37 % |
| (KS E-2315) | Escherichia coil | 99.99 % | 99.99 % | 75 % | 43 % |
| 99% or higher | | | | | |
| Antibacte rial properties exhibition | | | | | |

Although the present disclosure has been described with reference to the accompanying drawings, the present disclosure is not limited by the embodiments disclosed herein and the drawings, and it is obvious that various modifications may be made by those skilled in the art within the scope of the technical idea of the present disclosure. In addition, although the effects based on the configuration of the present disclosure are not explicitly described and illustrated in the description of the embodiment of the present disclosure above, it is natural that predictable effects of the corresponding configuration should also be recognized.

## Claims

1. A detergent glass composition comprising:
a mixture of a first glass composition and a second glass composition,
wherein the first glass composition includes:
based on 100wt% of the first glass composition,
60 to 70wt% of B₂O₃;
1 to 4wt% of Al₂O₃;
5 to 9wt% of CaO; and
15 to 30wt% of K₂O and Na₂O in total,
wherein the second glass composition includes:
based on 100wt% of the second glass composition,
65 to 70wt% of SiO₂;
5 to 9wt% of CaO; and
21 to 28wt% of K₂O and Na₂O in total.

2. The detergent glass composition of claim 1, wherein the first glass composition further includes 0 to 4wt% of MgO.

3. The detergent glass composition of claim 2, wherein the first glass composition includes CaO and MgO in an amount smaller than 10wt% in total.

4. The detergent glass composition of claim 2, wherein CaO, MgO, K₂O, and Na₂O included in the first glass composition satisfy a following Formula 1.
Formula 1: ([CaO] + [MgO]) /([K₂O] + [Na₂O]) < 0.53
(Here, [] represents wt% of each component.)

5. The detergent glass composition of claim 2, wherein CaO, MgO, K₂O, Na₂O, and B₂O₃ included in the first glass composition satisfy a following Formula 2.
Formula 2: ([CaO] + [MgO] + [K₂O] + [Na₂O])/[ B₂O₃] ≥ 0.37
(Here, [] represents wt% of each component.)

6. The detergent glass composition of claim 1, wherein the second glass composition further includes 0 to 4wt% of MgO.

7. The detergent glass composition of claim 6, wherein the second glass composition includes CaO and MgO in an amount smaller than 10wt% in total.

8. The detergent glass composition of claim 6, wherein CaO, MgO, K₂O, Na₂O, and SiO₂ included in the second glass composition satisfy a following Formula 3.
Formula 3: ([CaO] + [MgO] + [K₂O] + [Na₂O])/[ SiO₃] ≥ 0.42
(Here, [] represents wt% of each component.)

9. A method for preparing detergent glass powder, wherein a first glass composition is prepared, including:
based on 100wt% of the first glass composition,
60 to 70wt% of B₂O₃;
1 to 4wt% of Al₂O₃;
5 to 9wt% of CaO; and
15 to 30wt% of K₂O and Na₂O in total,
wherein a second glass composition is prepared, including:
based on 100wt% of the second glass composition,
65 to 70wt% of SiO₂;
5 to 9wt% of CaO; and
21 to 28wt% of K₂O and Na₂O in total,
wherein the method includes:
mixing and stirring the first glass composition with the second glass composition to form a glass composition;
melting the glass composition;
cooling the melted glass composition; and
grinding the cooled glass.

10. The method of claim 9, wherein the first glass composition further includes 0 to 4wt% of MgO.

11. The method of claim 10, wherein the first glass composition includes CaO and MgO in an amount smaller than 10wt% in total.

12. The method of claim 10, wherein CaO, MgO, K₂O, and Na₂O included in the first glass composition satisfy a following Formula 1.
Formula 1: ([CaO] + [MgO]) /([K₂O] + [Na₂O]) < 0.53
(Here, [] represents wt% of each component.)

13. The method of claim 10, wherein CaO, MgO, K₂O, Na₂O, and B₂O₃ included in the first glass composition satisfy a following Formula 2.
Formula 2: ([CaO] + [MgO] + [K₂O] + [Na₂O])/[ B₂O₃] ≥ 0.37
(Here, [] represents wt% of each component.)

14. The method of claim 9, wherein the second glass composition further includes 0 to 4wt% of MgO.

15. The method of claim 14, wherein the second glass composition includes CaO and MgO in an amount smaller than 10wt% in total.

16. The method of claim 14, wherein CaO, MgO, K₂O, Na₂O, and SiO₂ included in the second glass composition satisfy a following Formula 3.
Formula 3: ([CaO] + [MgO] + [K₂O] + [Na₂O])/[ SiO₃] ≥ 0.42
(Here, [] represents wt% of each component.)

17. The method of claim 9, wherein the melting is performed at a temperature in a range of 700 to 1,100°C for 1 to 60 minutes.
